# EUROPEAN PATENT APPLICATION

(11) **EP 4 675 803 A1**
(43) Date of publication of application: **07.01.2026**
(21) Application number: 25183480.0
(22) Date of filing: 17.06.2025
(51) Int. Cl.: H01M 50/264

(54) **BAND MEMBER, BATTERY MODULE, BATTERY PACK**

(30) Priority: 03.07.2024 KR 20240087420
(71) Applicant: SK On Co., Ltd., Seoul 03161 (KR)
(72) Inventor: JANG, Sun Ho, 34124 Daejeon (KR)
(74) Representative: Prüfer & Partner mbB Patentanwälte · Rechtsanwälte

(57) **Abstract**

A battery module includes a cell assembly including a plurality of battery cells, an end plate including a first end plate positioned on a front side of the cell assembly and a second end plate positioned on a back side of the cell assembly, and a band member surrounding the cell assembly and the end plate. The band member includes a first band region at least partially facing one side of the cell assembly, and a plurality of second band regions at least partially facing the other side of the cell assembly. A first distance between outer side surfaces of the first band region is shorter than a second distance between the plurality of second band regions.

## Description

### TECHNICAL FIELD

The embodiments of the present disclosure generally relate to a band member, a battery module, and a battery pack including the same, and more specifically, to a band member, a battery module including the band member, and a battery pack including the band member.

### BACKGROUND

Secondary batteries, unlike primary batteries, may be charged and discharged, and may be applied to devices within various fields such as digital cameras, mobile phones, laptops, hybrid cars, electric cars, and energy storage systems (ESS). Secondary batteries may be lithium-ion batteries, nickel-cadmium batteries, nickel-metal hydride batteries, or nickel-hydrogen batteries.

Secondary batteries are manufactured as flexible pouch-type battery cells or rigid prismatic or cylindrical can-type battery cells. A plurality of battery cells may be formed into a cell assembly in a stacked form. The cell assembly may form a battery module.

### SUMMARY

The battery module may include a cell assembly and a module housing accommodating the cell assembly and structurally supporting a plurality of battery cells. However, an energy density and manufacturing cost of a battery pack may increase due to the module housing.

According to an embodiment of the present disclosure a band member is provided which can structurally support a plurality of battery cells.

According to another embodiment of the present disclosure, a battery module is provided which includes a band member for reducing swelling of the battery cells of the battery module.

According to another embodiment of the present disclosure, a cell-to-pack (CTP) type battery pack is provided.

Yet another embodiment of the present disclosure relates to a battery module and a battery pack in which dead space of the battery pack is significantly reduced.

Yet another embodiment of the present disclosure relates to a battery module and a battery pack exhibiting significantly increased energy density.

The battery module and the battery pack according to embodiments of the present disclosure may be widely applied to green technology fields such as electric vehicles, battery charging stations, and other solar power generation and wind power generation using batteries. In addition, the battery module and battery pack according to embodiments of the present disclosure may be used in eco-friendly electric vehicles, hybrid vehicles, and the like and can assist in the prevention of climate change by suppressing air pollution and greenhouse gas emissions.

In an embodiment, a battery module includes a cell assembly including a plurality of battery cells; an end plate including a first end plate positioned on a front side of the cell assembly and a second end plate positioned on a back side of the cell assembly; and a band member surrounding the cell assembly and the end plate. The band member includes a first band region at least partially facing one side of the cell assembly, and a plurality of second band regions at least partially facing the other side of the cell assembly. A first distance between outer side surfaces of the first band region is shorter than a second distance between the plurality of second band regions.

In an embodiment, the band member may include a first fixed region connected to both ends of the first band region and facing the end plate, and a second fixed region connected to both ends of the plurality of second band regions and facing the end plate.

In an embodiment, the first fixed region may include a first end, and the second fixed region may include a second end overlapping at least a portion of the first end. The band member may include a bonding region connecting the first end and the second end.

In an embodiment, the band member may include a fastening hole formed in the first fixed region and the second fixed region, and a fastening member inserted into the fastening hole and connecting the first fixed region and the second fixed region.

In an embodiment, the end plate may include an inner surface facing the cell assembly and an outer surface opposite the inner surface and having a receiving groove. The first fixed region may include a first fastening portion inserted into the receiving groove, and the second fixed region may include a second fastening portion inserted into the receiving groove.

In an embodiment, the first fixed region may be spaced apart from the second fixed region, and the first fixed region and the second fixed region may be respectively coupled to the end plate.

In an embodiment, the first band region may include a plurality of first band regions spaced apart from each other.

In an embodiment, the plurality of first band regions may include first inner side surfaces facing each other, respectively, and first outer side surfaces opposite the first inner side surfaces. The plurality of second band regions may include second inner side surfaces facing the first outer side surfaces, respectively.

In an embodiment, the band member may include stainless steel.

In an embodiment, each of the plurality of battery cells may includes an electrode assembly, a case accommodating the electrode assembly, and a cap assembly including a terminal plate electrically connected to the electrode assembly and a cap plate coupled to the case.

In an embodiment, the terminal plate may be disposed on the cap plate, the cap assembly may further include a venting portion disposed on the cap plate, and the band member may be spaced apart from the cap plate.

In an embodiment, at least portions of the plurality of battery cells, the end plate, and the band member may be visually exposed to an outside of the battery module.

In an embodiment, a battery pack includes a plurality of battery modules; and a pack frame accommodating the plurality of battery modules. Each of the plurality of battery modules includes a cell assembly including a plurality of battery cells, an end plate including a first end plate positioned on a front side of the cell assembly and a second end plate positioned on a back side of the cell assembly, and a band member surrounding the cell assembly and the end plate. The band member includes a first band region at least partially facing one side of the cell assembly, and a plurality of second band regions at least partially facing the other side of the cell assembly. A first distance between outer side surfaces of the first band region is shorter than a second distance between the plurality of second band regions.

In an embodiment, the plurality of battery modules may include a first battery module including a plurality of first battery cells and a first band member surrounding the plurality of first battery cells, and a second battery module including a plurality of second battery cells and a second band member at least partially surrounding the plurality of second battery cells. The first band member may face the plurality of second battery cells, and the second band member may face the plurality of first battery cells.

In an embodiment, the first band member may include the first band region contacting the plurality of second battery cells, and the second band member may include the plurality of second band regions contacting the plurality of first battery cells.

In an embodiment, the first band region of the first battery module may be located between the plurality of second band regions of the second battery module.

In an embodiment, each of the plurality of battery cells may includes an electrode assembly, a case accommodating the electrode assembly, and a cap assembly including a terminal plate electrically connected to the electrode assembly and a cap plate coupled to the case. The case may be located between the first band region and the second band region.

In an embodiment, a band member includes a first band region configured to face one side of a cell assembly including a plurality of battery cells; a plurality of second band regions configured to face the other side of the cell assembly; a first fixed region connected to both ends of the first band region; and a second fixed region connected to both ends of the plurality of second band regions. A first distance between outer side surfaces of the first band region is shorter than a second distance between the plurality of second band regions.

In an embodiment, the first band region may include a plurality of first band regions spaced apart from each other.

In an embodiment, the plurality of first band regions may include first inner side surfaces facing each other, respectively, and first outer side surfaces opposite the first inner side surfaces. The plurality of second band regions may include second inner side surfaces facing the first outer side surfaces, respectively.

In an embodiment, A battery module includes a cell assembly including a plurality of battery cells stacked adjacent to each other between a front and a back end plate opposite to the front plate, the front end plate positioned on a front side of the cell assembly and the back end plate positioned on a back side of the cell assembly; and a band member contacting the front end plate, the back end plate, and opposite first and second lateral sides of the cell assembly and exerting a pressure against the end plates and the lateral sides of the cell assembly to hold the plurality of battery cells tightly stacked together, a first band region of the band member which contacts the first lateral side of the cell assembly does not overlap with a second band region of the band member which contacts the second lateral side of the cell assembly.

### BRIEF DESCRIPTION OF DRAWINGS

The above-mentioned and other embodiments, features, and advantages of the present disclosure will now be described in more detail with reference to the accompanying drawings.
FIG. 1 is a perspective view of a battery cell according to an embodiment of the present disclosure.
FIG. 2 is a perspective view of a battery module according to an embodiment of the present disclosure.
FIG. 3 is a perspective view of a battery module according to another embodiment of the present disclosure.
FIG. 4 is a perspective view of a band member according to an embodiment of the present disclosure.
FIG. 5 is an enlarged view of a band member according to an embodiment of the present disclosure.
FIG. 6 is an enlarged view of a band member according to another embodiment of the present disclosure.
FIG. 7 is an enlarged view of a band member according to yet another embodiment of the present disclosure.
FIG. 8 is a top view of a battery module including the band member and end plate of FIG. 7.
FIG. 9 is an exploded perspective view of a battery pack according to an embodiment of the present disclosure.
FIG. 10 is a front view of a battery pack according to an embodiment of the present disclosure.

### DETAILED DESCRIPTION

Features of the embodiments of the present disclosure are described with reference to the accompanying drawings.

Hereinafter, embodiments of the present disclosure will be described in detail with reference to the attached drawings. However, this is merely illustrative and the embodiments are not limited to the specific embodiments described herein.

The terms or words used in the present specification and claims described below are not to be construed as limited to their conventional or dictionary meanings.

Therefore, it will be understood that the embodiments described in this specification and the configurations of the embodiments illustrated in the drawings do not represent all of the technical ideas of the present disclosure.

A detailed description of known functions and configurations that may obscure the gist of the present disclosure is omitted. In the attached drawings, some components are exaggerated, omitted, or schematically illustrated, and the size of each component does not entirely reflect the actual size.

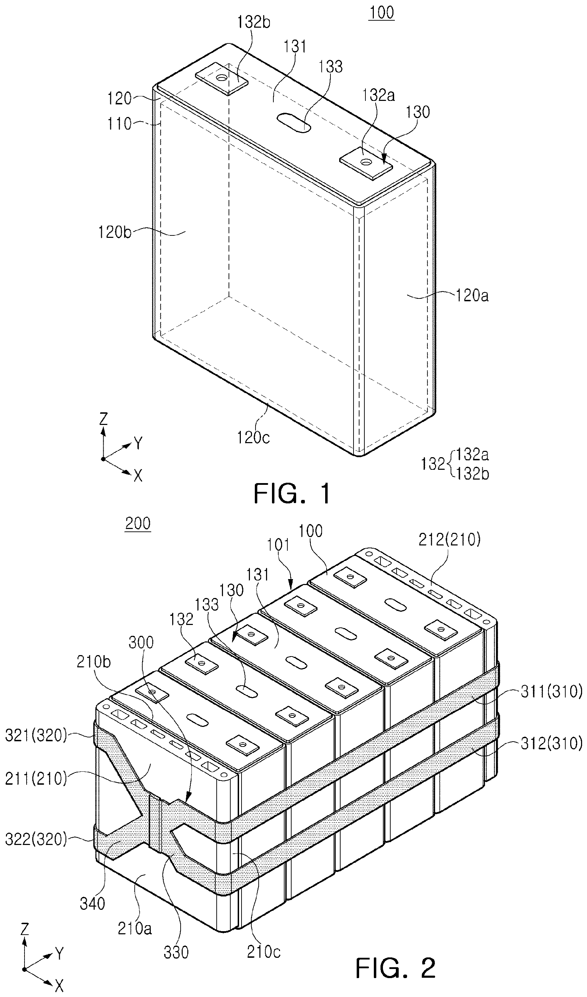

FIG. 1 is a perspective view of a battery cell according to an embodiment of the present disclosure.

Referring to FIG. 1, a battery cell 100 may be a secondary battery cell. The battery cell 100 may be, for example, a prismatic secondary battery cell. For example, the battery cell 100 may be a lithium ion battery, but is the embodiments are not limited thereto. For example, the battery cell 100 may be a nickel-cadmium electric, nickel-metal hydride battery, or nickel-hydrogen battery capable of being charged and discharged. The battery cell 100 may include an electrode assembly 110, a case 120 that accommodates the electrode assembly 110, and a cap assembly 130.

The electrode assembly 110 may include a cathode plate, an anode plate, and a separator. The separator may prevent contact between the cathode plate and the anode plate. Those skilled in the art will appreciate that the electrode assembly 110 may be manufactured using a variety of methods. In some embodiments, the cathode plate, the anode plate, and the separator may be repeatedly disposed to form the electrode assembly. In other embodiments, the electrode assembly may be a winding type, a stacking type, a z-folding type, or a stack-folding type.

The case 120 may form at least a portion of the visible structure of the battery cell 100 from outside of the battery cell 100. For example, the case 120 may provide a space in which the electrode assembly 110 and an electrolyte are accommodated. In an embodiment, the case 120 may include aluminum and/or stainless steel, however these are just some examples of the materials that may be used to make the case 120. The case 120 may be referred to as a can or a housing. In an embodiment as illustrated in the FIG. 1, the case 120 may have a substantially rectangular parallelepiped shape with at least a portion of the case 120 being open. For example, a top part (also referred to as a top surface) of the case 120 may be open and may be enclosed by the cap assembly 130. The case 120 may be formed in a substantially rectangular parallelepiped shape. For example, the case 120 may include a first side surface 120a, a second side surface 120b, and a rear surface 120c. In an embodiment, the first side surface 120a may be referred to as a narrow side surface, and the second side surface 120b may be referred to as a wide side surface.

The cap assembly 130 may be coupled to the case 120. For example, the cap assembly 130 may together with the case 120 form the space that accommodates the electrode assembly 110 and the electrolyte.

The cap assembly 130 may include a plurality of components. For example, the cap assembly 130 may include a cap plate 131 coupled to the case 120, and a terminal plate 132 electrically connected to the electrode assembly 110. The cap plate 131 may seal the case 120. The terminal plate 132 may have positive or negative polarity. For example, the terminal plate 132 may include a first terminal plate 132a electrically connected to the cathode plate of the electrode assembly 110 and a second terminal plate 132b electrically connected to the anode plate of the electrode assembly 110. According to an embodiment, the first terminal plate 132a and the second terminal plate 132b may be arranged substantially parallel to each other. The terminal plate 132 may be disposed on the cap plate 131.

The cap assembly 130 may include a venting portion 133, also referred to as a venting part. The venting portion 133 may be disposed on the cap plate 131. The venting portion 133 may be located between the first terminal plate 132a and the second terminal plate 132b. The venting portion 133 may provide a path for gases, flames, and/or conductive particles generated inside the battery cell 100 to be transferred to the outside of the battery cell 100. For example, the venting portion 133 may have a shape that may be deformed (for example, ruptured) based on the pressure and/or temperature inside the battery cell 100. In an embodiment, the venting portion 133 may be formed in a notched, half-cut, engraving, or plate shape.

The components of the cap assembly 130 described above are only provided as examples, and thus, some of the components of the cap assembly 130 may be modified or omitted or other components not described may be added. For example, the cap assembly 130 may include an electrolyte inlet, an electrolyte sealing member, a current collector, an insulating plate, a rivet terminal, and/or a gasket all of which are rather well known in the art.

The shape of the battery cell 100 illustrated in FIG. 1 is illustrative of one embodiment, and, it should be noted that the size/shape of the battery cell 100 and/or the size/shape of the terminal plate 132 may be changed depending on the design of the battery cell 100.

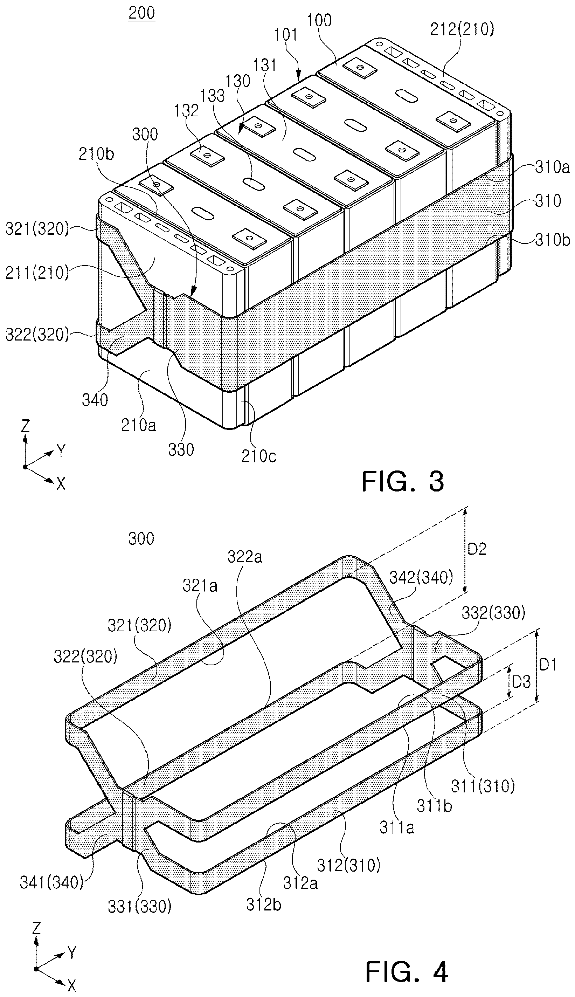

FIG. 2 is a perspective view of a battery module according to an embodiment of the present disclosure. FIG. 3 is a perspective view of a battery module according to another embodiment of the present disclosure. FIG. 4 is a perspective view of a band member according to an embodiment of the present disclosure.

Referring to FIG. 2 and/or FIG. 4, a battery module 200 may include a cell assembly 101, an end plate 210, and a band member 300. In an embodiment, the battery module 200 may be referred to as a sub-battery module. For example, the battery module 200 may not include a module housing. A plurality of battery modules 200 may form a cell-to-pack (CTP)-type battery pack.

A cell assembly 101 may include a plurality of battery cells 100. The description of the battery cell 100 of FIG. 1 may apply to the battery cell 100 of FIG. 2. The plurality of battery cells 100 may be arranged along a first direction, such as, for example, a Y-axis direction. In an embodiment, the cell assembly 101 may include a buffer pad (not illustrated) and/or a heat dissipation pad (not illustrated) positioned between at least some of the plurality of battery cells 100. In an embodiment, the cell assembly 101 may include an insulating plate (not illustrated) positioned between the outermost battery cell 100 among the plurality of battery cells 100 and the end plate 210. In an embodiment, the cell assembly 101 may be referred to as a cell stack.

The end plate 210 may be positioned on both sides of the cell assembly 101. For example, the end plate 210 may include a first end plate 211 positioned on one side of the cell assembly 101 (referred to hereinafter also as a front side) and a second end plate 212 positioned on the other side of the cell assembly 101 (referred to hereinafter as a back side) opposite to the front side. The cell assembly 101 may be positioned between the first end plate 211 and the second end plate 212.

The end plate 210 may provide pressure to the battery cells 100 positioned on both sides of the cell assembly 101. The battery cells 100 may be provided with substantially constant surface pressure by the end plate 210. By providing the surface pressure to the battery cells 100, the lifespan of the battery cells 100 may be improved. In an embodiment, the end plate 210 may include metal such as, for example, aluminum or stainless steel.

The band member 300 may structurally fix a plurality of battery cells 100. The band member 300 may fix the positions of the cell assembly 101 and the end plate 210. For example, the band member 300 may surround the cell assembly 101 and the end plate 210.

The band member 300 may include a material capable of providing elasticity. For example, the band member 300 may include stainless steel. In an embodiment, the band member 300 may be referred to as a steel band or simply as a band.

The end plate 210 together with the band member 300 may structurally secure the cell assembly 101. The end plate 210 may be connected to the band member 300. The cell assembly 101 may be surrounded by the end plate 210 and the band member 300. The end plate 210 may be subjected to pressure by the band member 300. The band member 300 may reduce or prevent swelling of the battery cells 100.

In an embodiment, band member 300 may include fixed regions 330 and 340, a first band region 310, and a second band region 320. The end plate 210 may include one or more mounting grooves (not illustrated) for receiving the fixed regions 330 and 340 of the band member 300. By inserting the fixed regions 330 and 340 of the band member 300 into the corresponding fixing grooves of the end plates 210, detachment of the band member 300 may be prevented.

The band member 300 may be formed asymmetrically. For example, the band member 300 may include the first band region 310 at least a portion of which faces one side of the cell assembly 101 (also referred to as a first lateral side of the cell assembly 101) and the second band region 320 at least a portion of which faces the other side (referred to also as the second lateral side) of the cell assembly 101. The second band region 320 may include a plurality of second band regions 321 and 322. The first band region 310 may include a plurality of first band regions 311 and 312. The cell assembly 101 may be surrounded by the first band region 310, the second band region 320, and the end plate 210. For example, a case (for example, the case 120 of FIG. 1) of the battery cell 100 may be positioned between the first band region 310 and the second band region 320.

The band member 300 may surround the battery cell 100 while being spaced apart from the cap assembly 130. The band member 300 may be spaced apart from the cap plate 131. For example, the first band region 310 and the second band region 320 may be spaced apart from the cap assembly 130 and surround the cell assembly 101.

The first band region may include the plurality of first band regions 311 and 312. The plurality of first band regions 311 and 312 may be arranged parallel to each other. For example, the plurality of first band regions 311 and 312 may include a 1-1 band region 311, and a 1-2 band region 312 spaced apart from the 1-1 band region 311. The elasticity of the first band region 310 may be changed based on the number and/or area of the first band regions 311 and 312. Since the first band region 310 is formed in multiple pieces, the elasticity of the first band region 310 may be substantially the same as the elasticity of the second band region 320.

The second band region 320 may include the plurality of second band regions 321 and 322. The plurality of second band regions 321 and 322 may be arranged parallel to each other. For example, the plurality of second band regions 321 and 322 may include a 2-1 band region 321, and a 2-2 band region 322 spaced apart from the 2-1 band region 321.

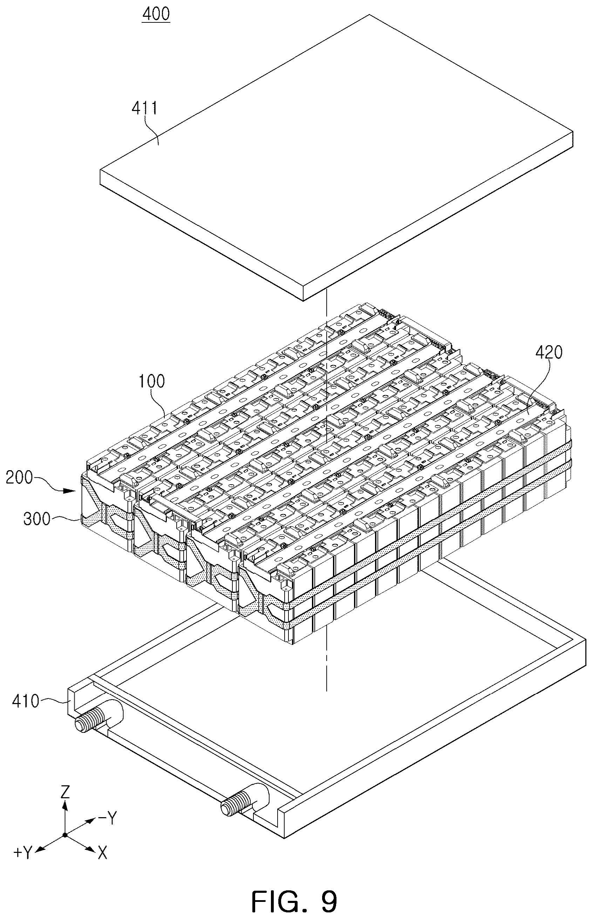

A first distance D1 between the outer side surfaces of the first band region 310 may be shorter than a second distance D2 between the plurality of second band regions 321 and 322. Since the first distance D1 is shorter than the second distance D2, the first band region 310 of one battery module 200 may be located between the plurality of second band regions 321 and 322 of another battery module 200. For example, the first band region 310 may be located between the 2-1 band region 321 and the 2-2 band region 322 on the Y-Z plane. When the first band region 310 is located between the plurality of second band regions 321 and 322, the gap between plurality of battery modules 200 stacked in a battery pack is reduced, and the energy density of the battery pack may be increased. See, for example, the battery pack 400 of FIG. 9.

The first band region 310 may be located between a plurality of second band regions 321 and 322. For example, the plurality of first band regions 311 and 312 may include first inner side surfaces 311a and 312a facing each other, respectively, and first outer side surfaces 311b and 312b opposite the first inner side surfaces 311a and 312a. The plurality of second band regions 321 and 322 may include second inner side surfaces 321a and 322a facing the first outer side surfaces 311b and 312b, respectively. The first band region 310 may be located between the second inner side surfaces 321a and 322a. The first distance D1 may be a distance between the first outer side surfaces 311b and 312b of the first band region 310. The second distance D2 may be a distance between the second inner side surfaces 321a and 322a of the second band region 320. The second distance D2 may be longer than a third distance D3 between the first inner side surfaces 311a and 312a of the plurality of first band regions 311 and 312.

The band member 300 may have a shape for readily fixing the first band region 310 and the second band region 320 tightly around the battery module 200. For example, the band member 300 may include a first fixed region 330 connected to both ends of the first band region 310 and facing the end plate 210, and a second fixed region 340 connected to both ends of a plurality of second band regions 320 and facing the end plate 210. For example, the first fixed region 330 may include a 1-1 fixed region 331 facing the first end plate 211 and a 1-2 fixed region 332 facing the second end plate 212. The 1-1 fixed region 331 and the 1-2 fixed region 332 may respectively extend from both ends of the first band region 310. For example, the second fixed region 340 may include a 2-1 fixed region 341 facing the first end plate 211 and a 2-2 fixed region 342 facing the second end plate 212. The 2-1 fixed region 341 and the 2-2 fixed region 342 may respectively extend from both ends of the second band region 320. In an embodiment, the first fixed region 330 and the second fixed region 340 may be formed in a shape intersecting each other.

In an embodiment, the first fixed region 330 and the second fixed region 340 may be coupled to each other. For example, the 1-1 fixed region 331 may be coupled to the 2-1 fixed region 341. The 1-2 fixed region 332 may be coupled to the 2-2 fixed region 342. The band member 300 may be formed in a substantially closed curve shape. For example, the band regions 310 and 320 and the fixed regions 330 and 340 may surround the cell assembly 101.

In an embodiment, the first fixed region 330 and the second fixed region 340 may be coupled to the end plate 210. For example, the 1-1 fixed region 331 and the 2-1 fixed region 341 may be coupled to the first end plate 211. The 1-2 fixed region 332 and the 2-2 fixed region 342 may be coupled to the second end plate 212. The fixed regions 330 and 340 are further described below.

In an embodiment as shown, for example, in FIG. 3, the plurality of first band regions 311 and 312 may be replaced with one band. For example, the band member 300 may include one first band region 310 and a plurality of second band regions 321 and 322. The distance between the outer side surfaces 310a and 310b of the first band region 310 may be shorter than the distance between the plurality of second band regions 321 and 322. If the first band region 310 of one battery module 200 can be disposed between a plurality of second band regions 321 and 322 of another battery module 200, the number of first band regions 310 may be designed selectively. If the first band region 310 of one battery module 200 can be disposed between a plurality of second band regions 321 and 322 of another battery module 200, the first band region 310 can be provided as the plurality of first band regions 311 and 312 or can be provided as one band.

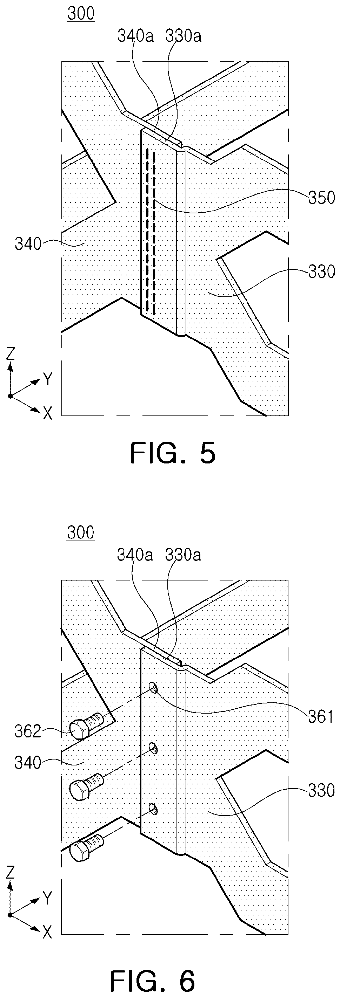

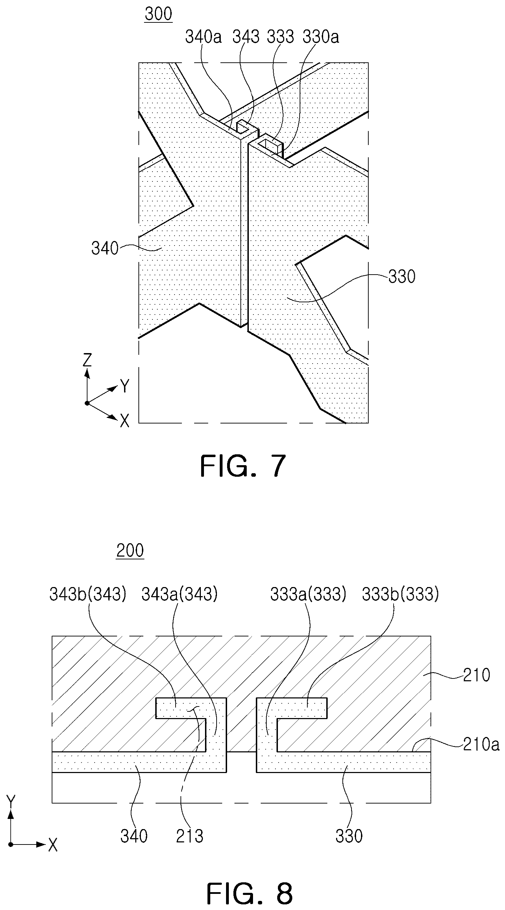

FIG. 5 is an enlarged view of a band member according to an embodiment of the present disclosure. FIG. 6 is an enlarged view of a band member according to another embodiment of the present disclosure. FIG. 7 is an enlarged view of a band member according to yet another embodiment of the present disclosure. FIG. 8 is a top view of a battery module including the band member and the end plate of FIG. 7.

Referring to FIGS. 5, 6, and/or 7, the battery module 200 may include an end plate 210 and a band member 300. The band member 300 may include fixed regions 330 and 340. The description of the battery module 200, the end plate 210, and the band member 300 of FIGS. 2 and/or 4 may be applied to the battery module 200, the end plate 210, and the band member 300 of FIGS. 5, 6, and/or 7.

According to an embodiment, for example, as shown in FIGS. 5 and 6, the first fixed region 330 and the second fixed region 340 of the band member 300 may be disposed to overlap at least partially. For example, the first fixed region 330 may include a first end 330a, and the second fixed region 340 may include a second end 340a that overlaps at least with a portion of the first end 330a.

According to an embodiment, as shown, for example, in FIG. 5, the band member 300 may be formed using welding. For example, the band member 300 may include a bonding region 350 connecting the first end 330a and the second end 340a. The first end 330a of the first fixed region 330 and the second end 340a of the second fixed region 340 may be joined to each other using welding. Also, as an example, the first and second fixed regions 330 and 340 may be formed integrally.

According to an embodiment, for example, as shown in FIG. 6, the band member 300 may be formed using bolting. For example, the band member 300 may include one or more fastening holes 361 formed in the first fixed region 330 and the second fixed region 340. For example, each of the fastening holes 361 may be a through hole or groove formed in the first end 330a of the first fixed region 330 and the second end 340a of the second fixed region 340. The band member 300 may also include a fastening member 362, such as, for example, a bolt inserted into the fastening hole 361. The fastening member 362 may be inserted into the fastening hole 361 of the first fixed region 330 and the fastening hole 361 of the second fixed region 340to connect the first fixed region 330 and the second fixed region 340 together. In an embodiment, the end plate 210 may include a fastening groove (not illustrated) configured to receive a portion of the fastening member 362 and this way the fastening member 362 may couple the band member 300 to the end plate 210.

According to an embodiment, for example, as shown in FIGS. 2, 7, and 8, the band member 300 may be coupled using a forced fit. For example, the end plate 210 may include an inner surface 210b facing the cell assembly 101, and an outer surface 210a opposite the inner surface 210b. The outer surface 210a may have a receiving groove 213. The receiving groove 213 may receive at least a portion of the band member 300.

In an embodiment, for example, as shown in FIGS. 7 and 8, the first fixed region 330 may be spaced apart from the second fixed region 340. For example, the first fixed region 330 and the second fixed region 340 of the band member 300 may be respectively coupled to the end plate 210. For example, the first fixed region 330 of the band member 300 may include a first fastening portion 333 inserted into a receiving groove 213, and the second fixed region 340 may include a second fastening portion 343 inserted into the receiving groove 213. By inserting the first fastening portion 333 and the second fastening portion 343 into the end plate 210, the band member 300 may be coupled to the end plate 210. By coupling the fixed regions 330 and 340 to the end plate 210, the convenience of assembling the battery module 200 may be increased.

In an embodiment, the fastening portions 333 and 343 may extend in a bent shape from the ends 330a and 340a of the fixed regions 330 and 340. For example, in an embodiment, the first fastening portion 333 may include a first extension portion 333a extending substantially perpendicularly to the first end portion 330a, and a second extension portion 333b extending from the first extension portion 333a and being substantially parallel to the first end portion 330a. The second fastening portion 343 may include a third extension portion 343a extending substantially perpendicularly to the second end portion 340a, and a fourth extension portion 343b extending from the third extension portion 343a and being substantially parallel to the second end portion 340a.

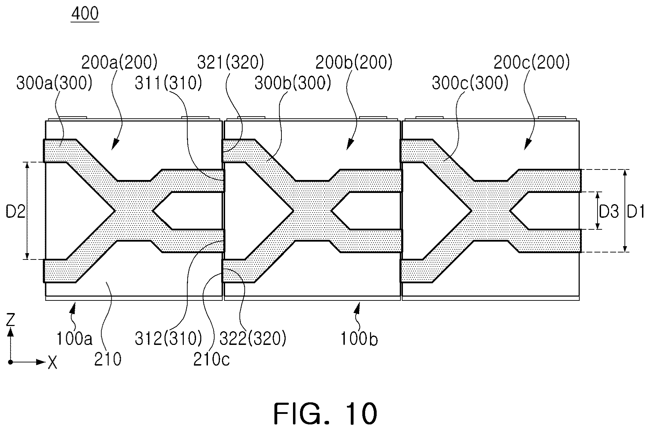

FIG. 9 is an exploded perspective view of a battery pack according to an embodiment of the present disclosure. FIG. 10 is a front view of a battery pack according to an embodiment of the present disclosure.

Referring to FIGS. 9 and 10, a battery pack 400 may include a plurality of battery modules 200 and a pack frame 410 supporting the plurality of battery modules 200. The description of the battery module 200 of FIG. 2 may be applied to the battery module 200 of FIGS. 9 and 10.

The battery pack 400 may be a cell-to-pack (CTP) type battery pack. For example, the battery module 200 may not include a module housing that accommodates the plurality of battery cells 100. At least portions of the plurality of battery cells 100, the end plate 210, and the band member 300 may be visually exposed to the outside of the battery module 200. In an embodiment, the battery module 200 may be referred to as a sub-battery module.

A plurality of battery cells 100 of the battery module 200 may be disposed on a pack frame 410. In an embodiment, the plurality of battery cells 100 may be disposed on the pack frame 410 using a thermally conductive adhesive. Since the battery pack 400 does not include a module housing, the mass of the battery pack 400 may be reduced and the energy density of the battery pack 400 may be improved. For example, the dead space caused by a module housing may be reduced.

The pack frame 410 may support components (for example, the battery modules 200) of the battery pack 400. For example, a plurality of battery modules 200 may be disposed on the pack frame 410. In an embodiment, the pack frame 410 may be referred to as a bottom plate. In an embodiment, the pack frame 410 may include a cooling path for cooling. The cooling path may provide a path for a coolant to flow.

In an embodiment, the pack frame 410 may include a pack cover 411 covering the plurality of battery modules 200.

In an embodiment, the battery pack 400 may include a heat transfer member (not illustrated) disposed on the pack frame 410. The heat transfer member may be a heat conductive pad, grease, or thermal adhesive. The heat transfer member may be positioned between the pack frame 410 and the battery module 200.

The battery module 200 may be provided in multiple units. For example, the plurality of battery modules 200 may include a first battery module 200a, a second battery module 200b, and a third battery module 200c. A plurality of battery modules 200a, 200b and 200c may be arranged along a second direction, for example, the X-axis direction. The number or arrangement location of the battery modules 200 may be selectively designed.

The battery pack 400 may include a busbar assembly 420 electrically connected to the battery cells 100. At least a portion of the busbar assembly 420 may be joined to the battery cells 100. The current of the battery cells 100 may be transmitted to the outside of the battery module 200 through the busbar assembly 420. The busbar assembly 420 may be located at an upper portion of the battery module 200, for example, in the Z-axis direction. In an embodiment, the busbar assembly 420 may include a module busbar that electrically connects the plurality of battery modules 200. In an embodiment, the busbar assembly 420 may include a terminal busbar configured to be electrically connected to the exterior of the battery pack 400.

The band member 300 may be formed asymmetrically. For example, a first distance D1 between the outer side surfaces of the first band regions 310 may be shorter than a second distance D2 between the plurality of second band regions 321 and 322. As the first distance D1 of the band member 300 is shorter than the second distance D2, the band member 300 may be brought into contact with the battery cell 100. By bringing the band member 300 into contact with the battery cell 100, the dead space of the battery pack 400 and the gap between the battery modules 200 may be reduced.

The battery pack 400 may include a plurality of battery modules 200 at least some of which are in contact with one another. For example, the plurality of battery modules 200 may include a first battery module 200a including a plurality of first battery cells 100a and a first band member 300a at least partially surrounding the plurality of first battery cells 100a, and a second battery module 200b including a plurality of second battery cells 100b and a second band member 300b at least a portion of which surrounds the plurality of second battery cells 100b. The first band member 300a may face the plurality of second battery cells 100b. The second band member 300b may face the plurality of first battery cells 100a. In an embodiment, the first band region 310 (for example, the 1-1 band region 311 and the 1-2 band region 312) of the first band member 300a may face a side surface of the second battery module 200b (for example, a side surface of the second battery cell 100b). A plurality of second band regions 321 and 322 of the second band member 300b may face a side surface of the first battery module 200a (for example, a side surface of the first battery cell 100a).

In an embodiment, the first band member 300a may contact a plurality of first battery cells 100a. The second band member 300b may contact a plurality of second battery cells 100b. In an embodiment, the band member 300 may face the side surface 210c of the end plate 210 and the battery cell 100.

Due to the contact between the band member 300 and the battery cell 100, the dead space inside the battery pack 400 may be reduced.

The first band region 310 of the first battery module 200a may be located between a plurality of second band regions 321 and 322. By the first band region 310 being located between the plurality of second band regions 321 and 322, the dead space of the battery pack 400 may be reduced, and the energy density of the battery pack 400 may be improved.

The number of battery modules 200 included in the battery pack 400 is illustrative. For example, the battery pack 400 may further include a third battery module 200c that is parallel to the first battery module 200a and the second battery module 200b. The second battery module 200b may be positioned between the first battery module 200a and the third battery module 200c. The third battery module 200c may include a third band member 300c that faces at least a portion of the second battery module 200b.

As set forth above, according to an embodiment, a swelling phenomenon of battery cells may be reduced.

According to an embodiment, the number of components of a battery pack may be reduced.

According to an embodiment, dead space of a battery pack may be reduced.

According to an embodiment, energy density of a battery pack may be improved.

The contents described above are merely examples of applying the principles of the present disclosure.

Although the invention has been described by reference to specific embodiments, many variations, improvements, and enhancements of the disclosed embodiments and other embodiments may be made based on the present disclosure. For example, the embodiments of the present disclosure may be implemented by deleting some of the components, and respective embodiments may be implemented in combination with each other. Furthermore, the embodiments may be combined to form additional embodiments.

(Aspect 1) A battery module comprising: a cell assembly including a plurality of battery cells; an end plate including a first end plate positioned on a front side of the cell assembly and a second end plate positioned on a back side of the cell assembly; and a band member surrounding the cell assembly and the end plate, wherein the band member includes a first band region at least partially facing one side of the cell assembly, and a plurality of second band regions at least partially facing the other side of the cell assembly, and a first distance between outer side surfaces of the first band region is shorter than a second distance between the plurality of second band regions.

(Aspect 2) The battery module of aspect 1, wherein the band member includes a first fixed region connected to both ends of the first band region and facing the end plate, and a second fixed region connected to both ends of the plurality of second band regions and facing the end plate.

(Aspect 3) The battery module of aspect 2, having one or more of the following characteristics (i) to (ii), respectively alone or in combination: (i) the first fixed region includes a first end, and the second fixed region includes a second end overlapping at least a portion of the first end, and the band member includes a bonding region connecting the first end and the second end, or (ii) the band member includes a fastening hole formed in the first fixed region and the second fixed region, and a fastening member inserted into the fastening hole and connecting the first fixed region and the second fixed region.

(Aspect 4) The battery module of aspect 2, wherein the end plate includes an inner surface facing the cell assembly and an outer surface opposite the inner surface and having a receiving groove, and the first fixed region includes a first fastening portion inserted into the receiving groove, and the second fixed region includes a second fastening portion inserted into the receiving groove.

(Aspect 5) The battery module of aspect 4, wherein the first fixed region is spaced apart from the second fixed region, and wherein the first fixed region and the second fixed region are respectively coupled to the end plate.

(Aspect 6) The battery module of any one of aspects 1 to 5, wherein the first band region includes a plurality of first band regions spaced apart from each other.

(Aspect 7) The battery module of aspect 6, wherein the plurality of first band regions include first inner side surfaces facing each other, respectively, and first outer side surfaces opposite the first inner side surfaces, and wherein the plurality of second band regions include second inner side surfaces facing the first outer side surfaces, respectively.

(Aspect 8) The battery module of any one of aspects 1 to 7, having one or more of the following characteristics (i) to (iii), respectively alone or in combination: (i) the band member includes stainless steel, (ii) each of the plurality of battery cells includes an electrode assembly, a case accommodating the electrode assembly, and a cap assembly including a terminal plate electrically connected to the electrode assembly and a cap plate coupled to the case, and/or wherein the terminal plate is disposed on the cap plate, wherein the cap assembly further includes a venting portion disposed on the cap plate, and wherein the band member is spaced apart from the cap plate, or (iii) at least portions of the plurality of battery cells, the end plate, and the band member are visually exposed to an outside of the battery module.

(Aspect 9) A battery pack comprising: a plurality of battery modules; and a pack frame accommodating the plurality of battery modules, wherein each of the plurality of battery modules includes, a cell assembly including a plurality of battery cells, an end plate including a first end plate positioned on a front side of the cell assembly and a second end plate positioned on a back side of the cell assembly; and a band member surrounding the cell assembly and the end plate, wherein the band member includes a first band region at least partially facing one side of the cell assembly, and a plurality of second band regions at least partially facing the other side of the cell assembly, and wherein a first distance between outer side surfaces of the first band region is shorter than a second distance between the plurality of second band regions.

(Aspect 10) The battery pack of aspect 9, wherein the plurality of battery modules include, a first battery module including a plurality of first battery cells and a first band member at least partially surrounding the plurality of first battery cells, and a second battery module including a plurality of second battery cells and a second band member at least partially surrounding the plurality of second battery cells, wherein the first band member faces the plurality of second battery cells, and wherein the second band member faces the plurality of first battery cells.

(Aspect 11) The battery pack of aspect 10, wherein the first band member includes the first band region contacting the plurality of second battery cells, and wherein the second band member includes the plurality of second band regions contacting the plurality of first battery cells.

(Aspect 12) The battery pack of aspect 10 or 11, wherein the first band region of the first battery module is located between the plurality of second band regions of the second battery module.

(Aspect 13) The battery pack of any one of aspects 9 to 12, wherein each of the plurality of battery cells includes an electrode assembly, a case accommodating the electrode assembly, and a cap assembly including a terminal plate electrically connected to the electrode assembly and a cap plate coupled to the case, and wherein the case is located between the first band region and the second band region.

(Aspect 14) A band member comprising: a first band region configured to face one side of a cell assembly including a plurality of battery cells; a plurality of second band regions configured to face the other side of the cell assembly; a first fixed region connected to both ends of the first band region; and a second fixed region connected to both ends of the plurality of second band regions, wherein a first distance between outer side surfaces of the first band region is shorter than a second distance between the plurality of second band regions.

(Apsect 15) The band member of aspect 14, wherein the first band region includes a plurality of first band regions spaced apart from each other, and/or wherein the plurality of first band regions include first inner side surfaces facing each other, respectively, and first outer side surfaces opposite the first inner side surfaces, and wherein the plurality of second band regions include second inner side surfaces facing the first outer side surfaces, respectively.

## Claims

1. A battery module comprising:
a cell assembly including a plurality of battery cells;
an end plate including a first end plate positioned on a front side of the cell assembly and a second end plate positioned on a back side of the cell assembly; and
a band member surrounding the cell assembly and the end plate,
wherein the band member includes a first band region at least partially facing one side of the cell assembly, and a plurality of second band regions at least partially facing the other side of the cell assembly, and
a first distance between outer side surfaces of the first band region is shorter than a second distance between the plurality of second band regions.

2. The battery module of claim 1, wherein the band member includes a first fixed region connected to both ends of the first band region and facing the end plate, and a second fixed region connected to both ends of the plurality of second band regions and facing the end plate.

3. The battery module of claim 2, having one or more of the following characteristics (i) to (ii), respectively alone or in combination:
(i) the first fixed region includes a first end, and the second fixed region includes a second end overlapping at least a portion of the first end, and
the band member includes a bonding region connecting the first end and the second end, and/or
(ii) the band member includes a fastening hole formed in the first fixed region and the second fixed region, and a fastening member inserted into the fastening hole and connecting the first fixed region and the second fixed region.

4. The battery module of claim 2, wherein the end plate includes an inner surface facing the cell assembly and an outer surface opposite the inner surface and having a receiving groove, and
the first fixed region includes a first fastening portion inserted into the receiving groove, and the second fixed region includes a second fastening portion inserted into the receiving groove.

5. The battery module of claim 4, wherein the first fixed region is spaced apart from the second fixed region, and
wherein the first fixed region and the second fixed region are respectively coupled to the end plate.

6. The battery module of any one of claims 1 to 5, wherein the first band region includes a plurality of first band regions spaced apart from each other.

7. The battery module of claim 6, wherein the plurality of first band regions include first inner side surfaces facing each other, respectively, and first outer side surfaces opposite the first inner side surfaces, and
wherein the plurality of second band regions include second inner side surfaces facing the first outer side surfaces, respectively.

8. The battery module of any one of claims 1 to 7, having one or more of the following characteristics (i) to (iii), respectively alone or in combination:
(i) the band member includes stainless steel,
(ii) each of the plurality of battery cells includes an electrode assembly, a case accommodating the electrode assembly, and a cap assembly including a terminal plate electrically connected to the electrode assembly and a cap plate coupled to the case, and/or
wherein the terminal plate is disposed on the cap plate,
wherein the cap assembly further includes a venting portion disposed on the cap plate, and
wherein the band member is spaced apart from the cap plate, or
(iii) at least portions of the plurality of battery cells, the end plate, and the band member are visually exposed to an outside of the battery module.

9. A battery pack comprising:
a plurality of battery modules; and
a pack frame accommodating the plurality of battery modules,
wherein each of the plurality of battery modules includes,
a cell assembly including a plurality of battery cells,
an end plate including a first end plate positioned on a front side of the cell assembly and a second end plate positioned on a back side of the cell assembly; and
a band member surrounding the cell assembly and the end plate,
wherein the band member includes a first band region at least partially facing one side of the cell assembly, and a plurality of second band regions at least partially facing the other side of the cell assembly, and
wherein a first distance between outer side surfaces of the first band region is shorter than a second distance between the plurality of second band regions.

10. The battery pack of claim 9, wherein the plurality of battery modules include,
a first battery module including a plurality of first battery cells and a first band member at least partially surrounding the plurality of first battery cells, and
a second battery module including a plurality of second battery cells and a second band member at least partially surrounding the plurality of second battery cells,
wherein the first band member faces the plurality of second battery cells, and
wherein the second band member faces the plurality of first battery cells.

11. The battery pack of claim 10, wherein the first band member includes the first band region contacting the plurality of second battery cells, and
wherein the second band member includes the plurality of second band regions contacting the plurality of first battery cells.

12. The battery pack of claim 10 or 11, wherein the first band region of the first battery module is located between the plurality of second band regions of the second battery module.

13. The battery pack of any one of claims 9 to 12, wherein each of the plurality of battery cells includes an electrode assembly, a case accommodating the electrode assembly, and a cap assembly including a terminal plate electrically connected to the electrode assembly and a cap plate coupled to the case, and
wherein the case is located between the first band region and the second band region.

14. A band member comprising:
a first band region configured to face one side of a cell assembly including a plurality of battery cells;
a plurality of second band regions configured to face the other side of the cell assembly;
a first fixed region connected to both ends of the first band region; and
a second fixed region connected to both ends of the plurality of second band regions,
wherein a first distance between outer side surfaces of the first band region is shorter than a second distance between the plurality of second band regions.

15. The band member of claim 14,
wherein the first band region includes a plurality of first band regions spaced apart from each other, and/or
wherein the plurality of first band regions include first inner side surfaces facing each other, respectively, and first outer side surfaces opposite the first inner side surfaces, and
wherein the plurality of second band regions include second inner side surfaces facing the first outer side surfaces, respectively.
